Europäisches Patentamt

European Patent Office

Office européen des brevets

(11) Publication number: **0 245 075**
**A1**

## (12) EUROPEAN PATENT APPLICATION

(21) Application number: **87303995.2**

(22) Date of filing: **05.05.87**

(51) Int. Cl.⁴: **B 60 R 22/20**

(30) Priority: **06.05.86 GB 8611009**

(43) Date of publication of application:
**11.11.87 Bulletin 87/46**

(84) Designated Contracting States: **DE FR GB**

(71) Applicant: **ASE (UK) LIMITED**
**Norfolk Street**
**Carlisle Cumbria CA2 5HX (GB)**

(72) Inventor: **Burke, David**
**34 Roseberry Road Stanwix**
**Carlisle Cumbria (GB)**

(74) Representative: **Ackroyd, Robert et al**
**POLLAK MERCER & TENCH High Holborn House 52-54**
**High Holborn**
**London WC1V 6RY (GB)**

(54) Adjustable anchorage.

(57) An adjustable shoulder anchorage for a vehicle seat belt system comprises a carriage 12, 14, 16, 18, 20, 22, to which a running loop 26 is secured by a bolt 24. The carriage slides on a track 10 and is supported thereon by engagement of flanges 34, 36 of the track in grooves 40, 42 of a slidable operating member 20 of the carriage. Latching arms 16, 18 secure the carriage to the track and are each engageable at both ends 62, 64, 66, 68 with the track. Sliding movement of the operating member in either direction along the track frees the arms from engagement because of co-operation between surfaces (52, 54 in Figures 2 and 3) on the operating member and ramped surfaces 88, 90, 92, 94 on the arms. In modifications, the operating member is in two resiliently-connected parts (120a, 120b in Figure 4) and can take the form of a spring toggle (222, 228, 246 in Figure 5) linking the latching arms.

FIG.1.

**Description**

## ADJUSTABLE ANCHORAGE

This invention relates to adjustable anchorages, for example adjustable shoulder anchorages for vehicle seat belt systems.

Some known adjustable anchorages are inconvenient in use, particularly as regards ease of adjustment, and are often also rather complicated in construction. The aim of the present invention is to overcome these disadvantages and to provide an adjustable anchorage which is convenient in use and straightforward in manufacture.

The invention provides an adjustable anchorage comprising a track, a carriage slidable along the track, securing means on the carriage for securing the carriage to the track at selected positions therealong, and means for operating the securing means to free the carriage for movement along the track from one selected position to another, the securing means comprising at least one latching arm which is pivotally mounted on the carriage and the latching arm being engageable with the track at its first and second ends of the arm in order to secure the carriage to the track and being disengageable from the track in response to the operating means to free the carriage for the said movement along the track.

Advantageously, the anchorage includes resilient biassing means acting to bias the or each latching arm into engagement with the track.

Such a construction can provide particularly secure engagement between the carriage and the track and can readily be arranged so that the securing means, when engaged with the track, secure the carriage against movement along the track in both directions. This feature is particularly advantageous in an adjustable shoulder anchorage according to the invention because the adjusted relative position of the carriage on the track will be maintained during circumstances in which the vehicle's orientation is changed from its normal orientation, for example in a roll-over accident of a motor vehicle.

Preferably the operating means comprises a manually-operable member which is slidable in first and second opposite directions along the track. The carriage can thus be freed for movement by movement of the operating means in the direction in which it is desired to move the carriage along the track.

This is a particularly advantageous feature because the manual movement of the operating means to free the securing means and the subsequent adjusting movement of the carriage along the track can be achieved in a single manual movement in one direction, for example, when the anchorage is employed as a vehicle seat belt shoulder anchorage, a single upward or downward movement to adjust the carriage up or down, respectively.

The securing means preferably comprises at least one latching arm which is pivotally mounted on the carriage and is engageable with the track, conveniently at a free end of the arm. The engagement is conveniently in a recess or aperture in the track.

Advantageously, the anchorage has two said arms each of which is engageable with recesses or apertures at opposite sides of the track. Conveniently, the two arms extend across each other and, more conveniently, the recess or apertures are in transversely aligned pairs and the recesses or apertures of each of two such pairs, preferably adjacent pairs, are simultaneously engageable by respective different arms.

When the anchorage has two latching arms, they are preferably pivotable about a common axis.

When the anchorage is an adjustable shoulder anchorage for a safety belt system of a vehicle, for example a motor vehicle, the carriage will normally support a running loop or, occasionally, a bracket supporting the upper end of a diagonal run of the safety belt. If so, it is preferred for the loop or bracket to be attached to the carriage by a bolt the axis of which is aligned with the axis of pivotation of the latching arm or arms. A particularly effective transfer of any load applied to the loop or bracket to the track is thus obtainable.

The operating means of the anchorage of the invention may comprise a manually-operable member, conveniently shaped for easy manual gripping, which is slidable relative to the carriage in the first and second directions and which interacts co-operatively with at least one said latching arm during such movement to effect pivotation of the arm to free the arm from engagement with the track. When the bracket or running loop attachment bolt mentioned above is provided, the manually-operable member may have an elongate aperture, through which the bolt passes and which allows the sliding movement to take place.

The interaction between the slidable member and the arm is advantageously by way of first and second ramped surface portions on one of the slidable member and the arm, the ramped portions being oppositely inclined and co-operating with the other of the slidable member and the arm during movement of the slidable member in the first and the second direction respectively to produce freeing pivotal movement of the arm. This arrangement allows anchorages to be constructed in which the operating means are operable with a very favourable mechanical advantage, this leading to an anchorage which can be freed for adjustment with a conveniently low mechanical force.

In one construction of anchorage, the arm has first and second ramp portions along one edge and these portions abut a cam surface on the slidable member so that, when the slidable member is moved relative to the carriage in both the first and in the second direction the cam surface slides along a respective one of the ramp portions to cause pivotation of the arm.

When there are two arms, the ramp portions are preferably on the outer edges of the arms and the slidable member has two opposed cam surfaces between which the arms are located.

In other anchorages of the invention the operating means comprises a linkage between a pair of latching arms or between one latching arm and the carriage, the linkage having a portion for manual engagement and being displaceable relative to the arm or arms by movement in the first and second directions to cause pivotation of the arm or arms and to free it or them from engagement with the track.

The linkage is advantageously resiliently biassed and may then act, alone or in combination with further resilient means, to bias the arm or arms into engagement with the track.

A resiliently-biassed linkage conveniently comprises a spring extending between the arms or the arm and carriage.

Preferred anchorages of any type according to the invention include resilient biassing means, such as further resilient means mentioned above, acting to bias the securing means into engagement with the track.

The track of the anchorage may comprise a channel-section member having a rear web and respective side wall shaving inwardly-directed flanges which define a slot through which the operating means protrude or are accessible.

The carriage may be supported for sliding movement by engagement of the flanges in longitudinal grooves in the carriage, preferably in a sliding member constituting the operating means.

When the securing means comprise two latching arms, these are conveniently in the form of a pair of overlying plates shaped at their free ends for engagement with the track.

In a preferred construction, the carriage comprises a body member on which one or more latching arms are pivoted and a resilient slide member, for example of plastics, which acts between the body part and the rear wall of a channel-section track to hold the carriage snugly in the track and prevent vibration and rattling of the carriage.

An embodiment of the invention will now be described by way of example with reference to the drawings of this specification, in which:

Figure 1 is an exploded perspective view of an adjustable shoulder anchorage,

Figure 2 is an underneath plan view of an operating memeber of the anchorage shown in Figure 1,

Figure 3 is a plan view, partly cut-away of the anchorage shown in Figure 1,

Figure 4 is a perspective view of an operating member of a first modified anchorage embodying the invention,

Figure 5 is a plan view of a portion of a second modified anchorage, and

Figure 6 is a perspective view of a portion of a third modified anchorage.

In the description which follows, the anchorage is assumed to be in its normal position of use, that is with its right-hand end in the drawings uppermost and its track extending vertically.

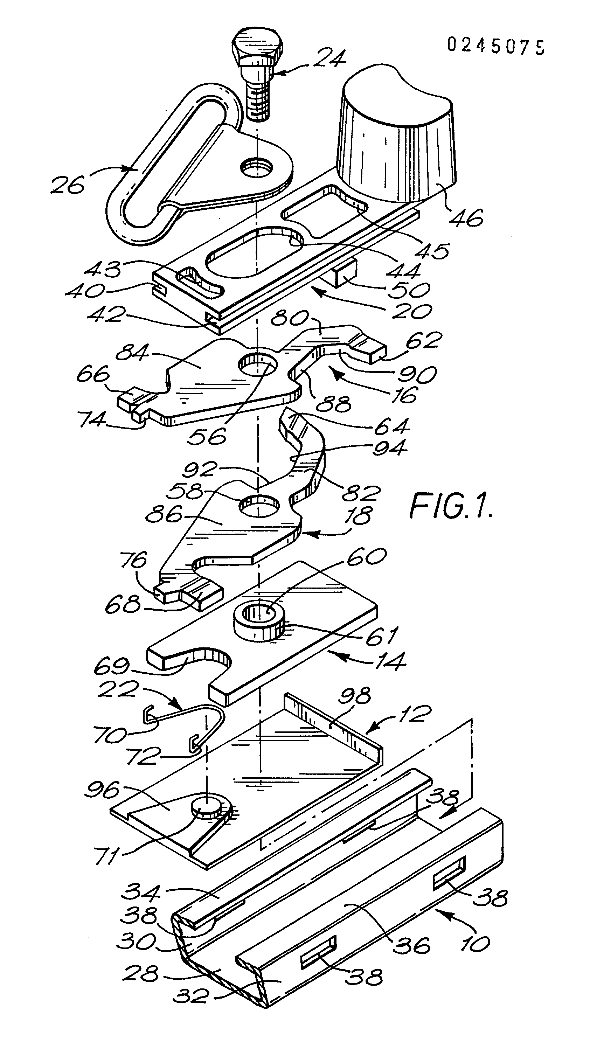

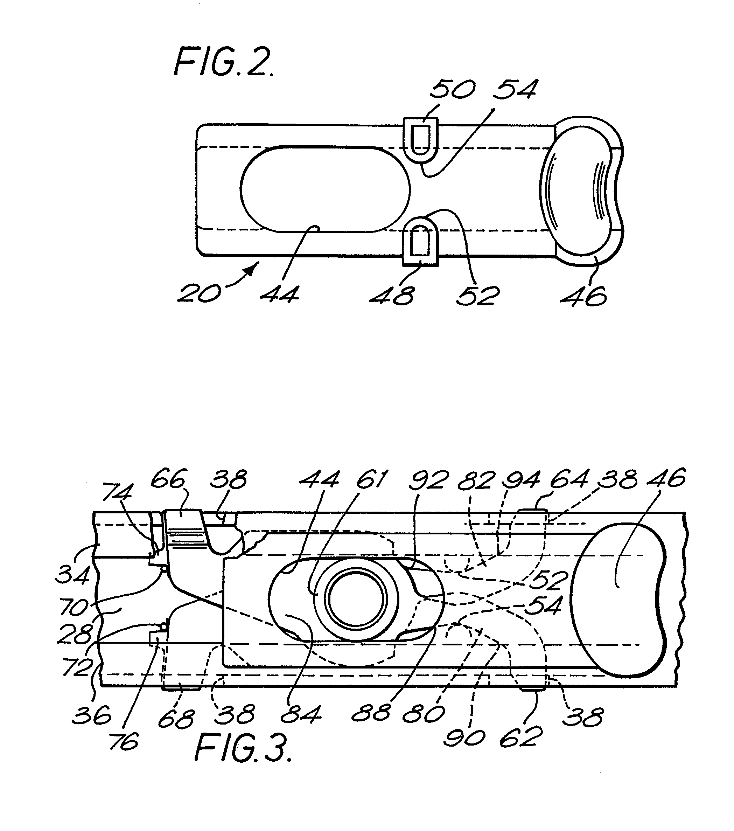

The anchorage shown in Figures 1 to 3 of the drawings consists of a channel section track 10, along which a carriage is slidable. The carriage consists of a slide member 12, a main body 14, front and rear latching arms 16, 18, a slidable operating member 20, a latching spring 22, an anchorage bolt 24 and an apertured attachment bracket of a running loop 26 for supporting the upper end of the diagonal run of a lap-and-diagonal vehicle safety belt.

The track 10 has a rear web 28 and side walls 30, 32. The side walls 30, 32 have respective inwardly directed flanges 34, 36 along their front edges and have at intervals spaced along their lengths respective series of rectangular apertures 38 which are arranged in transversely aligned pairs. The track 10 supports the carriage for sliding movement along the track by way of longitudinal grooves 40, 42 in the side edges of the operating member 20 of the carriage. The operating member 20 further has an elongate aperture 44, the purpose of which is explained below, and two further weight-saving recesses 43, 45. At its upper end, the operating member 20 is formed with a button 46 which is shaped for convenient manual engagement. The member has on its underside first and second protrusions 48, 50 which each extend inwardly from just outside a side edge of the operating member 20 and each have a part-circular cylindrical inner cam surface 52, 54 respectively.

The anchorage bolt 24, with the running loop 26 received on its shank, passes through the elongate aperture 44 in the operating member 20 and into a threaded socket 60 formed in the main body 14. The socket 60 is surrounded by a boss 61 which receives circular apertures 56, 58 in the front and rear latching arms 16, 18 which are thus pivotable on the boss 61 about an axis coincident with that of the shank of the anchorage bolt 24. Each arm 16, 18 has a central part 84, 86 and an upwardly-extending neck 80, 82. Each neck 80, 82 extends to an upper free end 62, 64 which is shaped for latching engagement with a track aperture 38. The arms 16, 18 further have lower free ends 66, 68 which are similarly shaped for engagement with the apertures 38.

The main body 14 is substantially rectangular in shape except for an arched cut-out 69 in its lower edge. This cut-out 69 receives a correspondingly-shaped raised portion 96 on the slide member 12 which also has a forwardly-projecting transverse flange 98 extending along its upper edge. The body 14 is thus captive on the slide member 12 between the raised portion 96 and the flange 98. A further cylindrical boss 71 extends forwardly from the raised portion 96 and receives the latching spring 22 around an upper part of its periphery, the spring thus being located in the body cut-out 69. The latching spring 22 is also of an arched shaped shape and has respective loops 70, 72 at the free ends of its two limbs. These loops 70, 72 engage with respective lugs 74, 76 formed on the front and rear latching arms 16, 18 adjacent their lower free ends 66, 68 and bias the arms 16, 18 towards engagement in the track apertures 38.

The operating member 20 is positioned relative to the latching arms 16, 18 such that the cam surfaces 52, 54 on the operating member protrusions 48, 50 are in abutment with the latching arm necks 82, 80 respectively. In other words, the protrusion 48 at the left-hand side of the operating member when viewed from the front abuts the neck 82 of the rear latching arm 18 and the other protrusion 50 correspondingly abuts the neck 80 of the front latching arm 16. The edge surfaces of the necks 80, 82 which abut the cam surfaces 54, 52 have first 88, 92 and second 90, 94 mutually-inclined ramped portions. The ramp surfaces 88, 90, 92, 94 interact with the cam surfaces 52, 54 when the slide member 12 is slid relative to the remainder of the carriage.

It will now be assumed that the carriage is engaged with the track with the free ends 62, 64, 66, 68 of the latching arms 16, 18 biassed by the spring 22 into engagement with two respective pairs of track apertures 38. In this condition, the cam surface 52 is located at the region of the joint between the ramp surfaces 92, 94 on the rear latching arm 18 and the cam surface 54 similarly located between the ramp surfaces 88, 90 on the front latching arm 16. Upon downward sliding movement of the operating member 20 relative to the track 10, the cam surfaces 54, 52 interact with the first ramped portions 88, 92 of the latching arm necks 80, 82 to cause pivotal movement of the latching arms 16, 18 about the axis of the anchorage bolt 24 such that the free ends 62, 64, 66, 68 of the latching arms are withdrawn from the track apertures 38 against the bias of the latching spring 22. With the latching arms withdrawn in this way, the carriage can be slid freely along the length of the track 10 and then moved to a further selected position where the latching arms 16, 18 engage with further pairs of apertures 38. Release of the operating member 20 before completion of such sliding movement will simply result in the free ends 62, 64, 66, 68 of the latching arms running along the insides of the side walls 30, 32 of the track 10 until they come into alignment with another pair of apetures, with which they will engage under influence of the latching spring 22. Over-running of the carriage beyond the desired new position relative to the track is thus avoided.

If the operating member 20 is moved upwardly relative to the remainder of the carriage, the cam surfaces 54, 52 will interact with the second ramped portions 90, 94 of the latching arm necks 80, 82 to cause identical pivotal movement of the latching arms 16, 18 and consequent freeing of the carriage for adjustment.

Although movement of the operating member 20 in either direction frees the carriage for movement in both directions, it should be noted that the operating member 20 will be most conveniently moved in the same direction as that in which the carriage is to be moved. Thus, to lower the running loop 26, the operating member 20 is simply moved downwardly and the carriage lowered in a single convenient movement and, to raise the running loop 26, a single upward movement is required. This convenience is a particularly advantageous feature of the anchorage of the present invention.

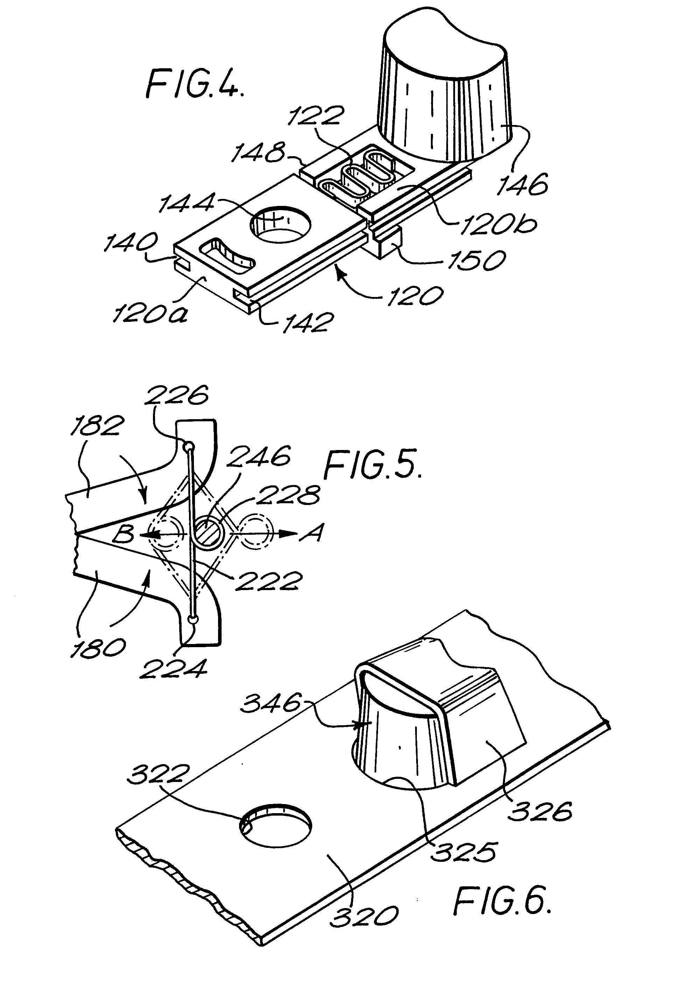

Figure 4 of the drawings shows a slidable operating member 120 which replaces the operating member 20 described above in a first modified shoulder anchorage. In this modification, the operating member 120 has a circular aperture 144, replacing the elongate aperture 44 and is formed with upper and lower parts 120a, 120b, the parts being linked by a serpentine integral resilient element 122. The operating member 120 has longitudinal grooves 140, 142 at side edges, these engaging the flanges of the track in the same way as the grooves 40, 42. The upper part 120b of the operating member has protrusions 148, 150, which are identical to the protrusions 48, 50 and function identically, and an operating button 146. In an alternative form (not shown), this first modified anchorage has its upper and lower operating member parts formed separately from each other and connected by a helical spring replacing the serpentine element 122.

Both forms of this first modified shoulder anchorage function and are operated similarly to the unmodified anchorage with the exception that movement of its operating button 146 produces movement of the upper operating member part 120b relative to the lower part 120a (and not movement of the operating member as a whole relative to the remainder of the carriage). This relative movement of the parts 120a, 120b causes an extension or compression of the resilient element 122 (or the spring replacing it in the alternative form of anchorage) to take place. On subsequent release of the operating button 146, the resilient element 122 or the spring recovers its unstressed condition and, in so doing, urges the upper operating member part 120b into a position in which its protrusions 148, 150 contact the latching arms of the anchorage in the region of the joint between their respective ramped surface portions. Movement of the latching arms into the track apertures upon release of the operating button 146 is thus promoted and any tendency for the latching arms not to engage in the first available set of track apertures when the carriage moves, under either gravity or manual action, with the operating button released is overcome.

In the second modified embodiment, shown in Figure 5, the operating member is omitted and resilient link 222 extends between the upwardly-extending necks 180, 182 of the latching arms. The link 222 comprises a resilient wire which is hooked into apertures 224, 226 in the latching arms at its two ends and has a central loop portion 228 which extends around an operating button 246. The resilient link 222 works with a toggle action to draw the necks 180, 182 together and release their free ends from the track apertures both when its central portion is moved upwardly relative to the track (arrow "A" on Figure 5) and when it is moved downwardly (arrow "B"). The advantage mentioned above of adjustment in a single movement is thus attained.

In a variant of this modification, the latching spring 22 is omitted and the resilient link 222 relied on solely to bias the latching arms 16, 18 into engagement with the track 10.

Figure 6 shows a part of a third modified anchorage. In this anchorage the operating button is movable relative to the carriage in a single, upward direction only. This movement frees the carriage for movement either up or down the track. Any other anchorage described herein can be similarly modified, or modified so that its operating button is movable in a single, downward direction only.

In the second modified anchorage has a plastics cover plate 320 which has a circular aperture 322 for receiving an anchorage bolt identical to the bolt 24. The cover plate 320 conceals the anchorage from view and has an elongate aperture 325 through an operating button 346 of an operating member identical to that shown in Figure 1 extends. Adjacent the aperture 325, the cover plate 320 has an integral shroud portion 326 which extends around part of the operating button 346 to allow a lower part of the button 346 and an upper part of the shroud 326 to be pinched together manually to free the carriage for movement along the track. This pinching together of the button 346 and shroud 326 produces an upward movement of the operating member relative to the anchorage bolt and main body of the carriage and thus frees the latching arms from the track apertures. In this and any other anchorage with a single direction of operating button movement, the latching arm necks need of course be shaped to cooperate with the operating member during relative movement therebetween in the single direction.

In modified versions of all the anchorages so far described, the slide member 12 is formed with a protrusion or indentation and the rear wall 28 of the track 10 with a corresponding set of spaced indentations or protrusions. These indentations and protrusions from detent means operative between the carriage and the track and produce weak engagement therebetween to define relative positions of these two parts at which the securing means of the carriage are in register for engagement with the track. The detent means thus allow the user to feel when the carriage is at one of its securement positions along the track.

It should further be noted that, in all the anchorages described, the latching arms 16, 18 are spring-biassed into positive engagement with the track apertures 38 and the lower and upper surfaces of the lower and upper free ends respectively of the arms are shaped so as not to be releasable from the apertures by downward and upward movement respectively of the carriage in the absence of manual operation of the operating member 20 or the resilient link 222. The latching of the carriage to the track is thus equally effective in all orientations of the anchorage which therefore keeps its adjusted position even in the event of the vehicle in which it is fitted being involved in a roll-over accident.

In further modified versions of the anchorages described, the track 10 is formed as an integral part of a motor vehicle body, for example its B-pillar. The provision of a cover plate, as shown in Figure 6, is particularly convenient in the case of these anchorages.

## Claims

1. An adjustable anchorage comprising a track, a carriage slidable along the track, securing means on the carriage for securing the carriage to the track at selected positions therealong, and means for operating the securing means to free the carriage for movement along the track from one selected position to another, the securing means comprising at least one latching arm which is pivotally mounted on the carriage and the latching arm being engageable with the track at its first and second ends of the arm in order to secure the carriage to the track and being disengageable from the track in response to the operating means to free the carriage for the said movement along the track.

2. An anchorage according to claim 1, including resilient biassing means acting to bias the or each latching arm into engagement with the track.

3. An anchorage according to claim 1 or 2, having first and second latching arms, each of which is pivotally mounted on the carriage and engageable with the track at first and second ends of the arm.

4. An anchorage according to claim 3, in which the latching arms are pivotable about a common axis.

5. An anchorage according to claim 3 or 4, in which each arm is engageable simultaneously at its first and second ends with respective opposite sides of the track.

6. An anchorage according to any of claims 3 to 5, in which the track has a plurality of recess or apertures which are in transversely aligned pairs with the apertures of each pair at opposite sides of the track, the recesses or apertures of two such pairs being simultaneously engageable by the first and second ends respectively of the latching arms.

7. An anchorage according to any preceding claim, in which the operating means comprises a manually-operable member, which is slidable relative to the carriage in first and second opposite directions longitudinally of the track and co-operates with the or each latching arm during such movement to effect pivotation of the arm or arms to free it or them from engagement with the track.

8. An anchorage according to claim 7, in which the slidable member co-operates with the or each arm by way of first and second ramped surface portions on the slidable member or the arm, the ramped portions being oppositely inclined and co-operating with the arm or the slidable member during movement of the slidable member in the first and second directions respectively to produce disengaging pivotal movement of the arm.

9. An anchorage according to claim 8, in which the or each arm has first and second ramp portions along one edge and these portions abut a surface on the slidable member so that, when the slidable member is moved relative to the carriage in either the first or the second direction, the surface slides along a respective one of the ramp portions to cause pivotation of the or each arm.

10. An anchorage according to any of claims 1 to 6, in which the operating means comprises a linkage between first and second latching arms or between a latching arm and the carriage, the linkage having a portion for manual engagement and being displaceable relative to the arm or arms by movement in the first and second directions to cause pivotation of the arm of arms and to free it or them from engagement with the track.

11. An anchorage according to claim 10, in which the linkage comprises a spring extending between the arms or between the arm and the carriage.

12. An anchorage according to any preceding claim, in which the track has a channel section and carriage comprises a body member on which the latching arm or arms are pivoted and a resilient slide member which acts between the body part and the rear wall of the track to hold the carriage snugly in the track and prevent vibration and rattling of the carriage.

13. An anchorage according to any preceding claim, in which the securing means act to secure the carriage to the track in all orientations of the anchorage.

14. An anchorage according to any preceding claim, in which the carriage is supported for sliding movement by engagement of inwardly-directed flanges of the track in longitudinal grooves in the carriage.

15. An anchorage according to claim 22, in which the grooves are in a sliding member constituting the operating means.

16. An anchorage according to claim 15, in which the sliding member is resiliently connected to a further part of the carriage which is supported for sliding movement by engagement of inwardly-directed flanges of the track in longitudinal grooves in the carriage, the sliding member being movable relative to the further part against the bias of the resilient connection to operate the securing means.

0245075

FIG.1.

*FIG.2.*

50 54

20 44 48 52 46

74 66 38 44 61 92 82 94 64 38 46

34

70

28

72

36 68 38 84 88 80 38

76 90 62

52

54

*FIG.3.*

FIG.4.

122
148
144
146
140
120b
150
120
120a
142

226
182
246
228
FIG.5.
B
A
222
180
224

346
322
326
325
320
FIG.6.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 384 647 (BROWN BROTHERS ENGINEERING LTD) * Figures 1,8,10; page 3, line 33 - page 4, line 13; page 4, line 36 - page 6, line 24 * | 1,2,13 | B 60 R 22/20 |
| | --- | | |
| Y | FR-A-2 516 799 (NSK-WARNER) * Whole document * | 1-6,13 ,14 | |
| | --- | | |
| P,Y | EP-A-0 180 306 (ASE (UK) LTD) * Figures 1-5; page 6, line 28 - page 9, line 33; page 15, lines 8-16 * | 1-6,13 ,14 | |
| | --- | | |
| A | FR-A-2 550 146 (TRW REPA GmbH) * Figures 1-13; page 12, line 18 - page 19, line 35 * | 1,2,7, 8,13 | **TECHNICAL FIELDS SEARCHED (Int. Cl.4)** |
| | --- | | B 60 R |
| A | EP-A-0 150 065 (AUTOLIV GmbH) * Figure 4; page 2, line 13 - page 3, line 32; page 10, line 31 - page 13, line 3 * | 1,2,7, 8,12, 13 | B 60 N |
| | --- | | |
| A | DE-A-3 523 422 (VOLKSWAGENWERK AG) * Whole document * | 1,2,9, 13 | |
| | ----- | | |

The present search report has been drawn up for all claims

| Place of search | Date of completion of the search | Examiner |
|---|---|---|
| THE HAGUE | 03-08-1987 | DUBOIS B.F.J. |